# EUROPÄISCHE PATENTANMELDUNG

(11) **EP 2 043 117 A2**
(43) Veröffentlichungstag der Anmeldung: **01.04.2009**
(21) Anmeldenummer: 08162891.9
(22) Anmeldetag: 25.08.2008
(51) Int. Cl.: H01H 3/02

(54) **Schnellspanneinrichtung**

(30) Priorität: 28.09.2007 DE 202007013591 U
(71) Anmelder: Bernstein AG, 32457 Porta Westfalica (DE)
(72) Erfinder: Ulfik, Joachim, 32602, Vlotho (DE); Winkelhake, Werner, 31675, Bückeburg (DE); Finger, Markus, 32425, Minden (DE)
(74) Vertreter: Dantz, Jan Henning

(57) **Zusammenfassung**

Eine Schnellspanneinrichtung (1) für Seilzugschalter umfasst ein Halteelement (2), an dem ein Seil (3) klemmend festlegbar ist, und ein Gehäuse (8), das mit dem Halteelement (2) verbunden ist, wobei zwischen Gehäuse (8) und Halteelement (2) Mittel (9, 10) zur Justierung vorgesehen sind und um eine vorbestimmte Spannung einzustellen. Ferner ist eine elektronische Einrichtung (30, 33) zur Erfassung der Spannung vorgesehen mittels der bei Abweichen der Spannung von einem Sollwertbereich ein Signal an eine Steuerung (22) erzeugbar ist. Dadurch lassen sich Abweichungen bei der Seilspannung schon frühzeitig erkennen und beheben.

## Beschreibung

Die vorliegende Erfindung betrifft eine Schnellspanneinrichtung Für Seilzugschalter mit einem Halteelement, an dem ein Seil klemmend festlegbar ist, und einem Gehäuse, das mit dem Halteelement verbunden ist, wobei zwischen Gehäuse und Halteelement Mittel zur Justierung vorgesehen ist, um eine vorbestimmte Spannung einzustellen.

Die US 5,003,135 offenbart eine Spanneinrichtung für einen Sicherheitsschalter, bei dem an einer Öse ein Seilzug festgelegt ist. Die Öse ist mit einer Gewindehülse verbunden, in die ein Gewindebolzen eingedreht ist, der wiederum mit dem Sicherheitsschalter gekoppelt ist. Zur Einstellung der Seilspannung kann eine Verstellung zwischen Gewindebolzen und Öse vorgenommen werden. Bei solchen mechanischen Schnellspanneinrichtungen besteht das Problem, dass ein Abfallen der Seilspannung oder eine Überspannung nur relativ spät über optische Anzeigemittel erkannt wird und insofern ein Nachspannen nur dann erfolgt, wenn meist schon eine Auslösung an dem Seilzugschalter erfolgt ist und dadurch ein Stillstand einer Maschine oder Produktionsanlage verursacht wurde. Die Pflege und Wartung dieser Schnellspanneinrichtungen ist vergleichsweise aufwendig.

Es ist daher Aufgabe der vorliegenden Erfindung eine Schnellspanneinrichtung für Seilzugschalter zu schaffen, die einfach zu warten ist und frühzeitig einen Spannungsabfall oder Anstieg signalisieren kann.

Diese Aufgabe wird mit einer Schnellspanneinrichtung mit den Merkmalen des Anspruches 1 gelöst.

Erfindungsgemäß weist die Schnellspanneinrichtung eine elektronische Einrichtung zur Erfassung der Spannung auf, mittels der bei Abweichen der Spannung von einem Sollwertbereich ein Signal an eine Steuerung erzeugbar ist. Dadurch kann eine Früherkennung erfolgen, wenn die Spannung des Seiles zu stark oder zu schlaff wird. Schon lange bevor ein Auslösen eines Seilzugschalters erfolgt, kann so ein Warnhinweis ausgegeben werden, um dann die Seilspannung nachzustellen. Es ist nicht erforderlich, eine optische Überwachung der Seilspannung in regelmäßigen Abständen vornehmen zu müssen.

Für eine exakte Erfassung der Seilspannung umfasst die elektronische Einrichtung vorzugsweise einen optischen Sensor. Der optische Sensor kann dabei geschützt in einem Gehäuse angeordnet sein und die Bewegung mindestens eines mit dem Seil gekoppelten Schwertes erfassen. Dabei kann das Schwert verschwenkbar an dem Gehäuse gelagert sein, so dass eine geeignete Übersetzung zwischen Seilspannung und Schwenkbewegung eingestellt werden kann.

Gemäß einer weiteren Ausgestaltung der Erfindung ist mittels dem Sensor auch die Bewegungsrichtung des Seiles erfassbar. Dadurch kann ein Signal ausgegeben werden, ob das Seil zu stark oder zu schlaff gespannt ist.

Vorzugsweise ist die Steuerung mit einem Temperatursensor verbunden und die Ausgabe eines Fehlersignals hinsichtlich der Spannung erfolgt temperaturabhängig. Gerade bei produktionstechnischen Anlagen können Temperaturschwankungen auftreten, so dass bei einem lange gespannten Seil Spannungsänderungen in Folge von Temperaturschwankungen auftreten können. Durch Einsatz eines Temperatursensors können solche Spannungsänderungen abhängig von der Temperatur über die Steuerung kompensiert werden, so dass Spannungsänderungen aufgrund von Temperaturänderungen erfasst aber als ungefährlich eingestuft werden können.

Die Erfindung wird nachfolgend anhand eines Ausführungsbeispieles mit Bezug auf die beigefügten Zeichnungen näher erläutert. Es zeigen:

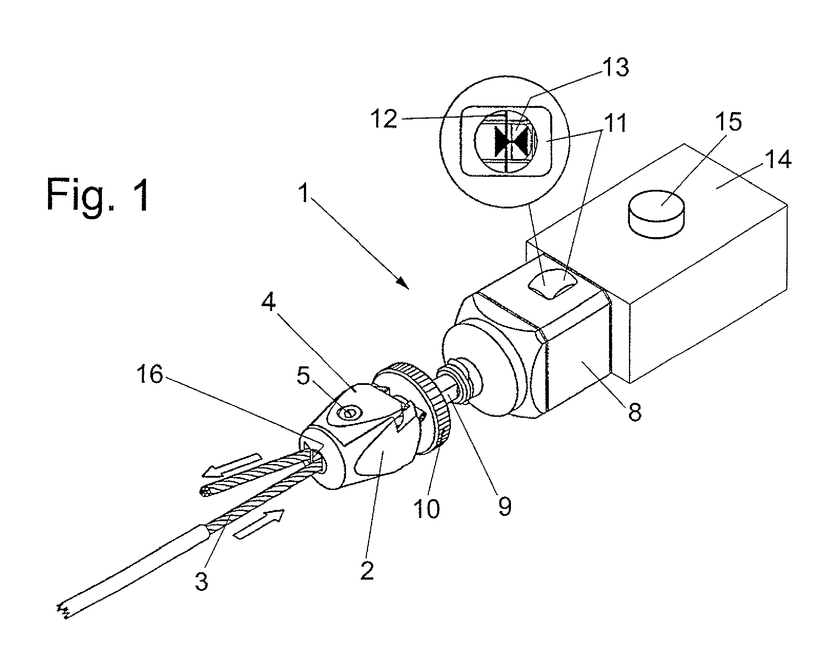

- Figur 1: eine perspektivische Ansicht einer erfindungsgemäßen Schnellspanneinrichtung;
- Figur 2: eine Ansicht der Schnellspanneinrichtung in der Einbausituation, und
- Figur 3: eine Detailansicht der Mittel zur Erfassung der Seilspannung der Schnellspanneinrichtung.

Eine Schnellspanneinrichtung 1 für einen Seilzugschalter umfasst ein Halteelement 2, an dem ein Seil 3 festlegbar ist. Hierfür ist das Seil 3 zwischen einer Platte 4 und dem Korpus des Halteelementes 2 gespannt, wobei die Platte 4 über eine Schraube 5 festlegbar ist, so dass eine Umlenkung des Seiles 3 zwischen Platte 4 und Halteelement 2 eingeklemmt ist.

Zur Feineinstellung der Spannung des Seiles 3 ist ferner eine Rändelmutter 10 vorgesehen, mittels der der Abstand zwischen dem Halteelement 2 und einem Gehäuse 8 veränderbar ist. Die Rändelmutter ist dabei über ein Gewinde mit einem Schaft 9 verbunden. An dem Gehäuse 8 kann eine optische Anzeige 11 für die Seilspannung vorgesehen sein, wobei an einem Sichtfenster 12 eine Markierung angebracht ist, und über einen bewegbaren Streifen 13 angezeigt wird, ob die Spannung des Seiles zu hoch oder zu niedrig ist.

Ferner ist ein Gehäuse 14 eines Seilzugschalters vorgesehen, der auch einen Auslöseknopf 15 aufweist, so dass ein Schalten sowohl bei Abweichen der Spannung des Seiles 3 von einem Sollwertbereich als auch manuell durch Drücken des Schalters 15 erfolgen kann.

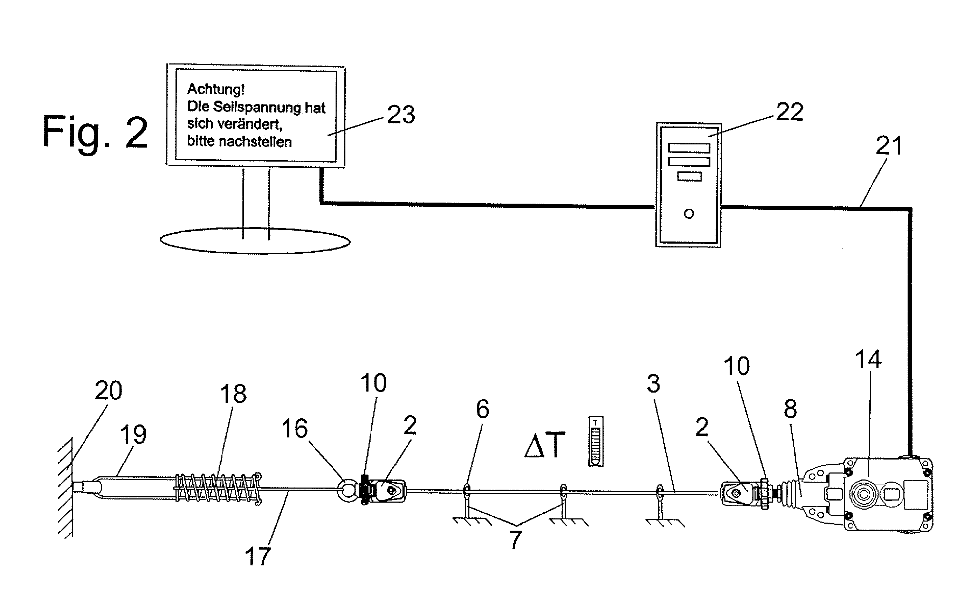

In Figur 2 ist die Schnellspanneinrichtung in der Einbausituation gezeigt. Das Seil 3 ist über mehrere Ösen 6 geführt, die jeweils an einem Halter 7 festgelegt sind, wobei das Seil 3 beispielsweise um eine Maschine gespannt sein kann. Am Ende des Seiles 3 ist eine weitere Schnellspanneinrichtung mit einem Halteelement 2 einer Rändelmutter 10 für die Feinjustierung sowie eine Öse 16 vorgesehen, die mit einem Zugelement 17 gekoppelt ist. Das Zugelement 17 ist über eine Feder 18 mit einem Halter 19 verbunden, der an einem festen Anbau oder eine Wand 20 festgelegt ist.

In dem Gehäuse 14 des Seilzugschalters ist eine elektronische Einrichtung zur Erfassung der Spannung vorgesehen, mittels der bei Abweichen der Spannung von einem Sollwertbereich über eine Leitung 21 ein Signal an einer Steuerung 22 erzeugbar ist. Wird beispielsweise die Spannung des Seiles 3 durch einen Unfall erhöht wird über den Seilzugschalter 14 die entsprechende Maschine abgeschaltet. Es kann aber auch sein, dass während des Betriebes über eine Ausdehnung des Seiles 3 und andere Faktoren die Seilspannung abfällt, aber keine Notsituation vorliegt. Dann kann bei Abfall der Seilspannung aus einem Sollwertbereich über die elektronischen Mittel frühzeitig ein Signal an die Steuerung 22 abgegeben werden, das die Seilspannung nachgestellt werden soll. Hierfür kann die Steuerung 22 mit einer Anzeigeeinrichtung 23 verbunden sein.

Zudem kann die Steuerung 22 mit einem Temperatursensor gekoppelt sein, so dass eine Längenänderung in Folge von Temperaturabweichungen erfasst werden kann, wobei dann entsprechend an der Steuerung der Sollwertbereich abhängig von der Temperatur eingestellt werden kann.

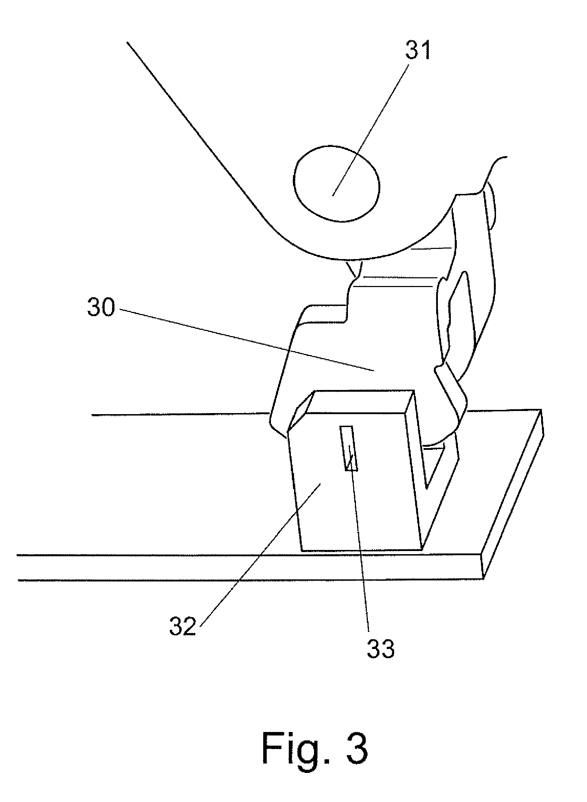

In Figur 3 ist die Einrichtung zur Erfassung der Seilspannung im Detail dargestellt. Ein Schwert 30 ist verschwenkbar um eine Achse 31 1 gelagert und über diverse Bauteile mit dem Seil 3 gekoppelt, so dass bei einer Veränderung der Seilspannung das Schwert 30 bewegt wird. Im gespannten Zustand ist eine optische Trennstrecke durch das Schwert 30 unterbrochen. Verändert sich die Spannung des Seiles 3, so wird die optische Trennstrecke freigegeben und ein Signal an die Steuerung 22 abgegeben. Hierbei ist an einer Halteeinrichtung 32 ein optischer Sensor 33 vorgesehen. Bei dem Schwert 30 können auch mehrere Trennstrecken in Form von Aussparungen, Fenstern oder ähnlichem vorgesehen sein, wobei zusätzlich auch die Auslöserichtung erkennbar ist. Ferner kann durch entsprechende Markierungen auch die Größe der Bewegung des Schwertes erfasst werden.

Mit einem zweiten Schwert lässt sich mit einer separaten Trennstrecke auch redundantes System aufbauen.

In dem dargestellten Ausführungsbeispiel ist das optische Erfassungssystem nur schematisch dargestellt. Es ist natürlich auch möglich, andere optische oder magnetische Sensoren zur Erfassung der Seilspannung vorzusehen.

## Patentansprüche

1. Schnellspanneinrichtung (1) für Seilzugschalter, mit einem Halteelement (2), an dem ein Seil (3) klemmend festlegbar ist, und einem Gehäuse (8), das mit dem Halteelement (2) verbunden ist, wobei zwischen Gehäuse (8) und Halteelement (2) Mittel (9, 10) zur Justierung vorgesehen sind, um eine vorbestimmte Spannung einzustellen, **dadurch gekennzeichnet, dass** eine elektronische Einrichtung (30, 33) zur Erfassung der Spannung vorgesehen ist, mittels der bei Abweichen der Spannung von einem Sollwertbereich ein Signal an eine Steuerung (22) erzeugbar ist.

2. Schnellspanneinrichtung nach Anspruch 1, **dadurch gekennzeichnet, dass** die elektronische Einrichtung zur Erfassung der Spannung einen optischen Sensor (33) aufweist.

3. Schnellspanneinrichtung nach Anspruch 2, **dadurch gekennzeichnet, dass** der optische Sensor (33) in einem Gehäuse (8, 14) angeordnet ist, und die Bewegung mindestens eines mit dem Seil gekoppelten Schwertes (30) erfassbar ist.

4. Schnellspanneinrichtung nach Anspruch 3, **dadurch gekennzeichnet, dass** das Schwert (30) verschwenkbar in dem Gehäuse (8, 14) gelagert ist.

5. Schnellspanneinrichtung nach einem der Ansprüche 1 bis 4, **dadurch gekennzeichnet, dass** mittels dem Sensor (33) die Bewegungsrichtung des Seiles (3) erfassbar ist.

6. Schnellspanneinrichtung nach einem der Ansprüche 1 bis 5, **dadurch gekennzeichnet, dass** über die Steuerung (22) eine Signalausgabe über die Abweichung der Spannung von einem Sollwert erzeugbar ist.

7. Schnellspanneinrichtung nach einem der Ansprüche 1 bis 6, **dadurch gekennzeichnet, dass** die Steuerung (22) mit einem Temperatursensor verbunden ist und die Ausgabe eines Fehlersignals hinsichtlich der Spannung temperaturabhängig erfolgt.
